# EUROPEAN PATENT APPLICATION

(11) **EP 4 227 126 A1**
(43) Date of publication of application: **16.08.2023**
(21) Application number: 22156372.9
(22) Date of filing: 11.02.2022
(51) Int. Cl.: B60J 5/04, B62D 65/06

(54) **MANUFACTURING METHOD FOR A DOOR ASSEMBLY FOR A VEHICLE**

(71) Applicant: Volvo Car Corporation, 40531 Göteborg (SE)
(72) Inventor: PRIM, Johan, 40531 Göteborg (SE)
(74) Representative: Maiwald GmbH

(57) **Abstract**

The present disclosure relates to a manufacturing method for a door assembly for a vehicle, a glazing fixture system, use such glazing fixture system and a computer program element for such a glazing fixture system.

The manufacturing method for a door assembly comprising at least a door body and a glazing element comprises measuring at least a first mounting position of the door assembly relative to a vehicle body before disassembling the door body for mounting the glazing element, disassembling the door body from the vehicle body, mounting the glazing element at the door body, determining a first receiving position of at least a first locator unit of a glazing fixture system based on the measured first mounting position, mounting the door body with the glazing element at the glazing fixture system, adjusting the first locator unit based on the determined first receiving position, and aligning the glazing element with the door body by means of the first locator unit of the glazing fixture system.

## Description

### TECHNICAL FIELD

The present disclosure relates to a manufacturing method for a door assembly for a vehicle, a glazing fixture system for manufacturing a door assembly for a vehicle, use such glazing fixture system and a computer program element for such glazing fixture system.

### BACKGROUND ART

Conventional doors for a vehicle comprise a door body coupled with a window glass, which may be raised to close a window opening and lowered to open the window opening. Generally, the door body comprises a frame surrounding edges of the window glass, thus defining a mounting position of the window glass. However, in case of a frameless door, at which at least a part of the edges of the window glass is exposed, an adjustment of the mounting position of the window glass requires work with high accuracy. Accordingly, a fixture system may be utilized to set a position of the glass window, thus to minimize spreads between the door assembly and the vehicle body.

The fixture system comprises one or more adjustment elements for adjusting the position of the glass window. However, positions of such adjustment elements are generally determined only based on the relative position of the window glass to the door body. Accordingly, after mounting the door assembly at the vehicle body, several additional adjustment steps for correctly aligning the door assembly with the vehicle body are often required.

### SUMMARY

Hence, there may be a need to improve manufacturing of a door assembly, which may facilitate an alignment of the door assembly during assembling at a vehicle body.

The problem is at least partially solved or alleviated by the subject matter of the independent claims of the present disclosure, wherein further examples are incorporated in the dependent claims. It should be noted that the aspects of the disclosure described in the manufacturing method for a door assembly for a vehicle, the glazing fixture system for manufacturing a door assembly for a vehicle, use such glazing fixture system and the computer program element for such glazing fixture system.

According to the present disclosure, a manufacturing method for a door assembly for a vehicle is presented. The manufacturing method for a door assembly comprising at least a door body and a glazing element comprises measuring at least a first mounting position of the door assembly relative to a vehicle body before disassembling the door body for mounting the glazing element, disassembling the door body from the vehicle body, mounting the glazing element at the door body, determining a first receiving position of at least a first locator unit of a glazing fixture system based on the measured first mounting position of the door assembly, mounting the door body with the glazing element at the glazing fixture system, adjusting the first locator unit based on the determined first receiving position, and aligning the glazing element with the door body by means of the first locator unit of the glazing fixture system.

The manufacturing method for a door assembly according to the present disclosure may ensure a precise adjustment of the glazing element of the door assembly, particularly for a frameless door, regardless of any model or type of the vehicle. Any changes in assembling position of the door assembly during a painting process may not affect mounting the door assembly to the vehicle body, since at least one alignment or mounting position of the door assembly relative to the vehicle body can be determined after the painting process. Accordingly, alignment steps of the door assembly with the vehicle body may be reduced, which may lead to saving in manufacturing time of the vehicle.

The door assembly may be mounted at each lateral side of the vehicle body by applying a hinge mechanism to pivotably move the door assembly between an open position and a closed position. The lateral side of the vehicle body may be understood as a perpendicular direction relative to a driving direction and/or a longitudinal direction of the vehicle.

The glazing element of the door assembly may be held at the door body by means of an elevator module. Preferably, the elevator module may be positioned inside the door body, e.g. a cavity between an outer door panel or skin and an inner door panel. Accordingly, the glazing element may be lowered inside the door body in an open position and raised into a closed position.

If the door body does not comprise any frame surrounding the glazing element, which may correspond to a frameless door, it may be difficult to precisely adjust the mounting position of the glazing element relative to the door body and/or the vehicle body. Hence, the glazing fixture system may be applied to facilitate adjusting the mounting position of the glazing element.

The glazing fixture system may be configured to precisely adjust the glazing element at the door body. The glazing fixture system may comprise one or more racks for supporting the door body and/or the glazing element and at least the first locator unit defining the mounting position of the glazing element relative to the door body and/or the vehicle body. Preferably, the glazing fixture system may comprise several locator units to accurately define the mounting position of the glazing element at the door body. When applying the glazing fixture system, the glazing element may be fully raised into the closed position.

Generally, the mounting position of the glazing element at the door body may be determined merely relative to each other. In other words, the position of the glazing element relative to the vehicle body, which may be crucial in case of a frameless door, is often neglected when assembling the glazing element at the door body. Further, the position of the glazing element is generally individually adjusted after mounting the door assembly at the vehicle body. However, this may increase manufacturing time and costs.

According to the present disclosure, at least one mounting position of the door assembly, i.e. the door body and/or the glazing element, relative to the vehicle body may be determined before disassembling the door body from the vehicle body for mounting the glazing element. For instance, the measurement may be performed in a final assemble shop directly after the painting process or in a body shop. Accordingly, any spread occurred during the painting process and/or discrepancy between the door assembly and the vehicle body may take into account, when determining the mounting position of the door assembly at the vehicle body. Hence, a precise measurement of the mounting position of the door assembly, particularly the glazing element may be achieved.

At least the first mounting position may be selected such that it may be able to provide a simple coordinate depending on design and type of the vehicle. The measurement of the mounting position(s) may be performed by means of any position sensor configured to measure an absolute position or a relative position with respect to angular, linear position or three-dimensional position changes. The position sensor may be selected from optical position sensors, ultrasonic position sensors, inductive position sensors, capacitive position sensors, hall-effect sensors, eddy-current sensors, etc.

The first mounting position may be indicated as a position coordinate in a coordinate system. The position coordinate may represent a relative distance and/or a relative angle between the door assembly and the vehicle body.

After measuring one or more mounting positions of the door assembly, the door body may be disassembled from the vehicle body and the glazing element may be arranged in the cavity of the door body, for instance at the elevator module. However, the glazing element may not be fixed at the door body and/or the elevator module yet to allow an adjustment of its position.

The measured first mounting position may provide a basis for determining the first receiving position of the first locator unit of the glazing fixture system, at which the glazing element may be received. The first locator unit may be movable or adjustable in any direction, e.g. horizontally, vertically and transversely relative to the door assembly with respect to the first receiving position. In other words, the first receiving position may define a position of the first locator unit at the glazing fixture system to allow the glazing element to be mounted and adjusted precisely complying with the first mounting position. To determine the first receiving position, a computer-implemented algorithm may be applied, which may also prompt a control unit to adjust the first receiving position of the first locator unit.

When at least the first locator unit is adjusted according to the first receiving position, the door assembly, i.e. the door body together with the glazing element, may be mounted at the glazing fixture system to adjust the position of the glazing element at the door body. When mounting the door assembly to the glazing fixture system, the glazing element may be fully raised to facilitate aligning the glazing element with the door body. Further, the first locator unit adjusted according to the determined first receiving position may hold the door body or the glazing element in a first mounting position. Alternatively, one or more additional locator unis may also receive the door body and the glazing element.

At least the first locator unit in the first receiving position may be adapted such that the glazing element may be accurately fit at the vehicle body after fixing the door assembly at the vehicle body. Thus, when the glazing element is aligned with the door body by means of the glazing fixture system, no further alignment step of the glazing element or only some minor revision may be required. Accordingly, an installation of the door assembly at the vehicle body may be facilitated.

In an example, the method further comprises arranging the first locator unit at the glazing fixture system facing a top portion of the glazing element when the glazing element is in a closed position. The first locator unit of the glazing fixture system may be positioned at the glazing fixture system to receive the top portion of the glazing element. The top portion of the glazing element may be a top edge of the glazing element, which may face a cantrail element of the vehicle when moving the door assembly and the glazing element in the closed position after mounting the door assembly at the vehicle body.

Generally, a glazing element of a frameless door may be easily damaged when the glazing element is mounted beyond its tolerance range. Further, the top portion of the glazing element and/or the top portion of the vehicle body facing the top portion of the glazing element may provide a reliable reference position for measuring the first mounting position of the door assembly and/or determining the first receiving position of the first locator unit. Accordingly, the first locator unit may be adjusted to accurately align the top portion of the glazing element with the door body and/or the vehicle body.

In an example, the method further comprises measuring a second mounting position of the door assembly relative to the vehicle body before disassembling the door body for mounting the glazing element, and determining a second receiving position of a second locator unit of the glazing fixture system based on the measured second mounting position, wherein the second locator unit is configured to receive the door body.

To reliably align the glazing element with the door body, at least one additional mounting position of the door assembly may be measured. Further, the glazing fixture system may comprise at least one additional locator unit to receive the door assembly. Accordingly, at least one additional receiving position for the at least one additional locator unit may be determined based on the at least one additional mounting position.

In particular, the second locator unit may be positioned at the glazing fixture system to receive the door body. Accordingly, the second mounting position may be measured at the door body before disassembling the door body from the vehicle body for mounting the glazing element. The computer-implemented algorithm may also determine the second receiving position of the second locator unit facing the door body.

The second locator unit may be also movable in any direction same as the first locator unit. Alternatively, the second locator unit may be movable only in one direction, e.g. vertical, horizontal or transverse direction relative to the door assembly. For instance, the second locator unit may be adjustable in the transverse direction of the door assembly, which may coincide with a perpendicular direction relative to a surface of the door body crossing through the door body. In other words, the second locator unit may be configured to adjust a distance between the door body and the glazing fixture system.

In an example, the glazing fixture may further comprise a third locator unit and a fourth locator unit, each of which may be configured to receive either the door body or the glazing element. Accordingly, a third receiving position and a fourth receiving position may be also determined by the computer-implemented algorithm to accurately align the glazing element with the door body.

In an example, the method further comprises receiving a top portion of the door body and/or a bottom portion of the door body by the second locator unit at the glazing fixture system, when mounting the door body with the glazing element at the glazing fixture system. Similar to the top portion of the glazing element, both of the top portion and the bottom portion of the door body may provide a reliable reference position for the second mounting position and/or the second receiving position. The top portion and the bottom portion of the door body may extend parallel to the longitudinal direction of the vehicle body in an assembled state of the door assembly. Accordingly, the second locator unit may be positioned at the glazing fixture system to receive the top portion of the door body or the bottom portion of the door body.

In an example, the method further comprises painting the door body before disassembling the door body for mounting the glazing element. Accordingly, any changes in assembling position of the door assembly or door body such as spread or discrepancy between the door assembly and the vehicle body occurred during the painting process may not affect the measurement of the mounting positions of the door assembly and aligning the glazing element with the door body.

In an example, the first mounting position comprises a coordinate of the top portion of the glazing element relative to the top portion of the vehicle body facing the top portion of the glazing element in an assembled state of the door assembly at the vehicle body and when the glazing element is in the closed position. The first mounting position may be selected such that it may be easily identified. The first mounting position may be indicated as a position coordinate in a coordinate system.

When measuring the first mounting position of the door assembly relative to the vehicle body, the door body of the door assembly is arranged at the vehicle body. However, the door assembly may not comprise the glazing element at this stage. Thus, the position coordinate of the top portion of the vehicle body may be regarded as and/or adapted to the position coordinate of the top portion of the glazing element. Additionally, an evaluated measurement of the position of the door body, e.g. upper portion and/or bottom portion, may stipulate the deviation from a nominal angle compared to the top portion of the vehicle body. Accordingly, the position coordinate of the first mounting position may represent a relative distance and/or a relative angle between the door assembly, particularly the top portion of the glazing element and the top portion of the vehicle body such as the cantrail element.

In an example, the second mounting position comprises a coordinate of the top portion of the door body relative to the top portion of the vehicle body in the assembled state of the door assembly at the vehicle body. Same as for the first mounting position, the second mounting position may be also selected such that it may be easily identified. The second mounting position may be indicated as a position coordinate of the top portion of the door body in a coordinate system. Thus, the position coordinate of the second mounting position may represent a relative distance and/or a relative angle between the top portion of the door body of the door assembly and the top portion of the vehicle body such as the cantrail element.

Alternatively, the position coordinate of the second mounting position may represent a relative distance and/or a relative angle between the top portion of the door body and a bottom portion of the vehicle body. Further, the position coordinate of the second mounting position may represent a relative distance and/or a relative angle between the bottom portion of the door body and the top portion of the vehicle body such as the cantrail element. The position coordinate of the second mounting position may also represent a relative distance and/or a relative angle between the bottom portion of the door body and the bottom portion of the vehicle body. Accordingly, a reliable measurement of the mounting positions may be achieved.

In an example, adjusting the first locator unit based on the determined first receiving position comprises adjusting a first locator element of the first locator unit in a transverse direction relative to the door assembly and/or a second locator element of the first locator unit in a vertical direction relative to the door assembly. The first locator unit may comprise at least the first locator element and the second locator element. The locator element and the second locator element may be connected with each other, however, movable in a different direction relative to each other.

For instance, the first locator element may be movable in the perpendicular direction relative to the surface of the door body, which may correspond to the transverse direction of the door assembly, i.e. a lateral direction relative to the driving direction of the vehicle in the assembled state of the door assembly at the vehicle body. Further, the second locator element may be movable in a vertical direction relative to the surface of the door body, which may correspond to the vertical direction of the door assembly.

Accordingly, the first locator element may adjust the position of the glazing element in the transverse and/or perpendicular direction relative to the door body and the second locator element may adjust the position of the glazing element in the vertical direction relative to the door body according to the first receiving position determined based on the first mounting position of the door assembly. In an example, the second locator element of the first locator unit may be pivotably connected to the first locator element to facilitate the vertical adjustment of the glazing element.

In an example, the second locator element may also comprise a first locator element for a lateral adjustment of the door body and/or a second locator element for a vertical adjustment of the door body.

In an example, the first locator element and the second locator element are capable to be operated independently of each other. Since the first locator element and the second locator element are configured to adjust the position of the glazing element in different directions, the first locator element and the second locator element may be also operated separately. The computer-implemented algorithm for determining the first receiving position may calculate each position of the first locator element and the second locator element separately for enabling them to be operated independently of each other. Accordingly, a precise adjustment of the glazing element at the door body may be achieved.

In an example, the method further comprises fixing the glazing element inside the door body by means of an adjustment element, wherein the adjustment element is configured to allow the glazing element to be fastened at least in the first mounting position. The glazing element may be inclined relative to the first locator unit when precisely mounted at the door body. As soon as the glazing element is aligned with the door body by means of the first and/or second locator units at the glazing fixture system, the glazing element may be fixedly held by the adjustment element. Hence, the adjustment element may be configured to fasten the glazing element in an inclined position relative to at least the first locator unit and/or the vertical direction of the door body.

The adjust element may be any fasteners such as screw, bolt, pin, plug, nail or the like. The adjustment element may be arranged at the bottom portion of the door body and/or the elevator module to hide the adjustment element from an outside of the door assembly.

Generally, if the glazing element may be accurately aligned with the door body, the glazing element may be inclined substantially in direction to a vehicle cabin in the assembled state of the door assembly at the vehicle body, which may be adjusted by the first locator unit based on the first receiving position. Hence, the adjustment element may ensure the glazing element to be maintained permanently in the inclined position, wherein the glazing element may be raised and lowered along the inclined position.

In an example, the method further comprises arranging at least one vertical locator unit at the glazing fixture system based on the first mounting position and/or the second mounting position of the door assembly. The vertical locator unit is configured to receive a vertical edge of the glazing element, when mounting the door assembly at the glazing fixture system. The glazing fixture system may further comprise the vertical locator unit configured to adjust a position of the vertical edge of the glazing element. The vertical edge of the glazing element may extend from a bottom portion to the top portion of the glazing element. Hence, the vertical locator unit may adjust the position of the glazing element in the parallel direction of the surface of the door body, which may coincide with the longitudinal direction of the vehicle body and/or the driving direction of the vehicle.

In an example, the first mounting position and/or the second mounting position of the door assembly are aligned substantially along a b-pillar of the vehicle body in the assembled state of the door assembly at the vehicle body. At least the first mounting position and/or the second mounting position at the door assembly may be selected such that they may be arranged adjacent to the b-pillar of the vehicle body, which may provide a reliable reference position for measuring the first mounting position and/or the second mounting position. Further, a flush arrangement of a front door assembly and a rear door assembly may be also pre-defined and controlled via the first mounting position and/or the second mounting position of the front door assembly and the rear door assembly.

According to the present disclosure, a glazing fixture system for manufacturing a door assembly for a vehicle is presented. The door assembly comprises at least a door body and a glazing element. The glazing fixture system comprises at least a first locator unit and a control unit. The control unit is configured to perform measuring at least a first mounting position of the door assembly relative to a vehicle body before disassembling the door body for mounting the glazing element, disassembling the door body from the vehicle body, mounting the glazing element at the door body, determining a first receiving position of at least the first locator unit based on the measured first mounting position of the door assembly, mounting the door body with the glazing element at the glazing fixture system, adjusting the first locator unit based on the determined first receiving position, and aligning the glazing element with the door body by means of the first locator unit of the glazing fixture system.

According to the present disclosure, use of a glazing fixture system for a door assembly for a vehicle is presented. The use of the glazing fixture system as described above is directed for mounting a glazing element at a door body of a door assembly without a door frame.

Hence, the glazing fixture system may be applied for any model or type of the vehicle. Further, the glazing fixture system may allow a fully automated assembling of the door assembly and reducing alignment steps of the door assembly with the vehicle body.

According to the present disclosure, a computer program element for a glazing fixture system as described above is presented. The computer program element is adapted to perform the method steps as described above for manufacturing a door assembly for a vehicle, when being executed by a processing element.

It should be noted that the above examples may be combined with each other irrespective of the aspect involved. Accordingly, the method may be combined with structural features and, likewise, the system may be combined with features described above with regard to the method.

These and other aspects of the present examples will become apparent from and elucidated with reference to the examples described hereinafter.

### BRIEF DESCRIPTION OF DRAWINGS

Examples according to the present disclosure will be described in the following with reference to the following drawings.
- Fig. 1: shows schematically and exemplarily an example of a vehicle comprise at least one door assembly manufactured by a method according to the present disclosure.
- Fig. 2: shows schematically and exemplarily an example of a door assembly manufactured by a method according to the present disclosure.
- Fig. 3: shows schematically and exemplarily an example of a glazing fixture system according to the present disclosure.
- Fig. 4: shows schematically and exemplarily an example of a first locator unit of a glazing fixture system according to the present disclosure.
- Fig. 5: shows schematically and exemplarily an example of a glazing fixture system according to the present disclosure.
- Fig. 6: shows schematically and exemplarily an example of a manufacturing method for a door assembly for a vehicle according to the present disclosure.

### DESCRIPTION OF EXAMPLES

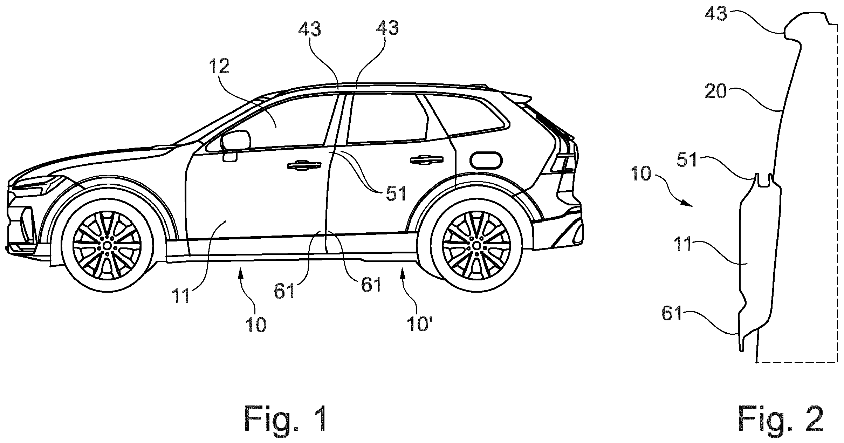

Fig. 1 shows a vehicle 100 comprising several door assemblies 10, 10' mounted at each lateral side of the vehicle body 20 by applying a hinge mechanism to pivotably move the door assembly 10 between an open position and a closed position. Each door assembly 10 comprises at least a door body 11 and a glazing element 12. Specifically, the door body 11 may not comprise any frame surrounding the glazing element 12. To facilitate assembling the glazing element 12 and the door body 11 for such a frameless door assembly precisely, a glazing fixture system 30 may be applied. When applying the glazing fixture system 30, the glazing element 12 may be fully raised into a closed position.

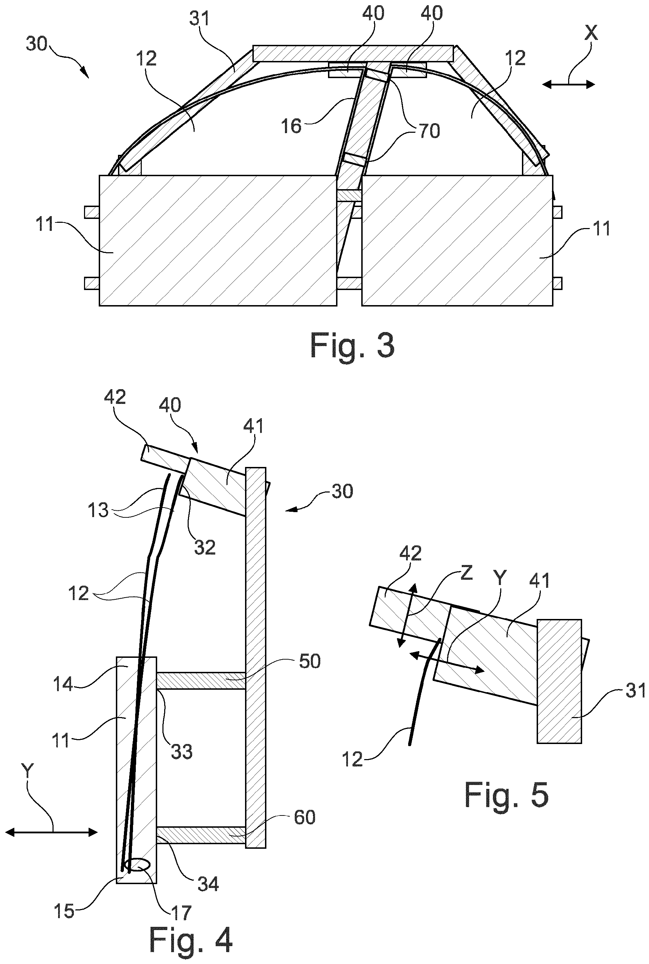

As shown in Fig. 3, the glazing fixture system 30 comprises one or more racks 31 forming a supporting structure for the door assembly 10. The glazing fixture system 30 further comprises a first locator unit 40, a second locator unit 50 and a third locator unit 60, which are configured to receive the glazing element 12 and/or the door body 11 when aligning the glazing element 12 with the door body 11 at the glazing fixture system 30. The first locator unit 40 is positioned at the glazing fixture system 30 to receive a top portion 13 of the glazing element 12, which may face a cantrail element of the vehicle 100 when moving the door assembly 10 and the glazing element 12 in the closed position. The second locator unit 50 is positioned at the glazing fixture system 30 to receive a top portion 14 of the door body 11. The third locator unit 60 is positioned at the glazing fixture system 30 to receive a bottom portion 15 of the door body 11.

Fig. 4 shows a side view of the glazing fixture system 30. The first locator unit 40 is configured to receive the top portion 13 of the glazing element 12 and adjust an inclined position of glazing element 12 relative to a vertical direction Z of the door body 11 or the door assembly 10. Meanwhile, the second locator unit 50 and the third locator unit 60 are configured to receive the door body 11 and adjust a distance between the door body 11 and the glazing fixture system 30. Accordingly, the first locator unit 40 may be able to move at least in a two-dimensional direction, whereas the second locator unit 50 and/or the third locator unit 60 are preferably fixed at the glazing fixture system 30. However, the second locator unit 50 and/or the third locator unit 60 may be adjustable at least in one direction, i.e. transverse direction Y relative to the door assembly 10.

Fig. 5 shows a side view of the first locator unit 40. The first locator unit 40 comprises a first locator element 41 and a second locator element 42. The first locator element 41 and the second locator element 42 are capable to be operated independently of each other.

The first locator element 41 may be movable in the transverse direction Y relative to the door assembly 10, which corresponds to a lateral direction of the vehicle body 20 when the door assembly 10 is mounted at the vehicle body 20. Accordingly, the first locator element 41 may adjust the position of the glazing element 12 in the transverse direction Y relative to the door assembly 10 and/or the lateral direction of the vehicle body 20. Further, the second locator element 42 is movable in the vertical direction Z relative to the door assembly 10. Accordingly, the second locator element 42 may adjust the position of the glazing element 12 in the vertical direction Z relative to the door body 11 and/or the door assembly 10.

The glazing fixture system 30 further comprises at least one vertical locator unit 70 to receive a vertical edge 16 of the glazing element 12 and adjust the position of the glazing element 12 in a longitudinal direction X of the vehicle body 20, i.e. driving direction of the vehicle 100.

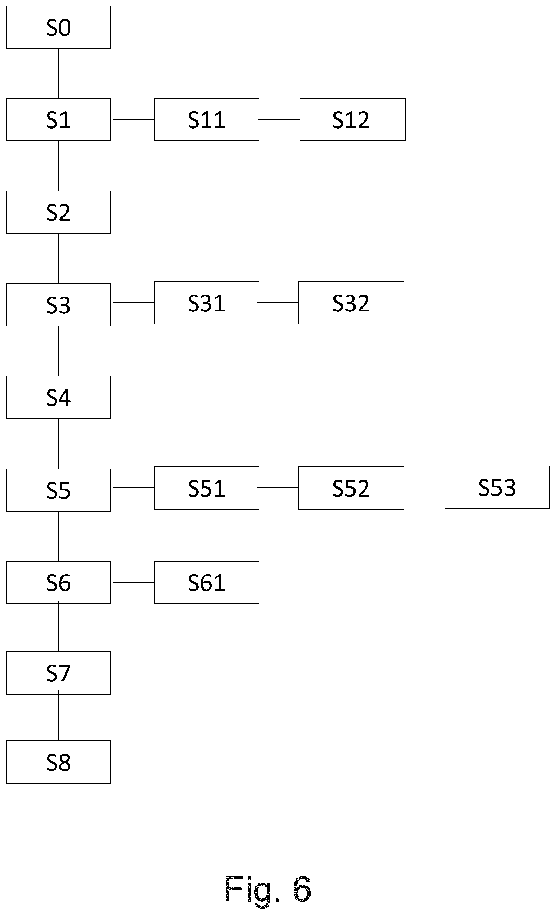

The glazing fixture system 30 further comprises a control unit configured to align the glazing element 12 with the door body 11 of the door assembly 10 automatically and precisely. Thus, as shown in Fig. 6, the control unit is configured to perform, but not necessarily in this order,
measuring S1 at least a first mounting position 43 of the door assembly 10 relative to the vehicle body 20 before disassembling the door body 11 for mounting the glazing element 12,
disassembling S2 the door body 11 from the vehicle body 20,
determining S3 a first receiving position 32 of at least the first locator unit 40 based on the measured first mounting position 43,
mounting S4 the disassembled door body 11 with the glazing element 12 at the glazing fixture system 30,
arranging S5 the first locator unit 40 at the glazing fixture system 30 to face the top portion 13 of the glazing element 12 when the glazing element 12 is in the closed position.
adjusting S6 the first locator unit 40 based on the determined first receiving position 32, and
aligning S7 the glazing element 12 with the door body 11 by means of the first locator unit 40 of the glazing fixture system 30.

The control unit is further configured to perform
measuring S11 a second mounting position 51 of the door assembly 10 relative to the vehicle body 20 before disassembling the door body 11 for mounting the glazing element 12,
measuring S12 a third mounting position 61 of the door assembly 10 relative to the vehicle body 20 before disassembling the door body 11 for mounting the glazing element 12,
determining S31 a second receiving position 33 of the second locator unit 50 of the glazing fixture system 30 based on the measured second mounting position 51,
determining S32 a third receiving position 34 of the third locator unit 60 of the glazing fixture system 30 based on the measured second mounting position 51,
receiving S51 the top portion 14 of the door body 11 by the second locator unit 50 at the glazing fixture system 30 when mounting the door body 11 with the glazing element 12 at the glazing fixture system 30,
receiving S52 the bottom portion 15 of the door body 11 by the third locator unit 60 at the glazing fixture system 30, when mounting the door body 11 with the glazing element 12 at the glazing fixture system 30,
arranging S53 at least one vertical locator unit 70 at the glazing fixture system 30 based on the first mounting position 43 and/or the second mounting position 51 of the door assembly 10 for receiving the vertical edge 16 of the glazing element 12, and/or
adjusting S61 the first locator element 41 of the first locator unit 40 in the transverse direction Y relative to the door assembly 10 and/or the second locator element 42 of the first locator unit 40 in the vertical direction Z relative to the door assembly 10.

The step of measuring the first, second and third mounting position 61 is performed after painting S0 the door body 11, but before disassembling S2 the door body 11 for mounting the glazing element 12. Accordingly, any changes in assembling position of the door assembly 10 or door body 11 such as spread or discrepancy between the door assembly 10 and the vehicle body 20 occurred during painting may not affect the measurement of the mounting positions of the door assembly 10 and aligning the glazing element 12 with the door body 11.

The measurement of the first, second and/or third mounting positions 43, 51, 61 may be performed by means of any position sensor configured to measure an absolute position or a relative position with respect to angular, linear position or three-dimensional position changes. The first mounting position 43, the second mounting position 51 and/or the third mounting position 61 of the door assembly 10 may be aligned substantially along a b-pillar of the vehicle 100 (see Fig. 1). The b-pillar of the vehicle 100 may provide a reliable reference position for measuring the at least one mounting positions. Further, a flush arrangement of a front door assembly 10 and a rear door assembly 10 may be also pre-defined and controlled via the first mounting position 43, the second mounting position 51 and/or the third mounting position 61 of the front door assembly 10 and the rear door assembly 10'.

As shown in Fig. 2, the first mounting position 43 may comprise a coordinate of the top portion 13 of the glazing element 12 relative to the top portion of the vehicle body 20 facing the top portion 13 of the glazing element 12 before disassembling the door body 11 for mounting the glazing element 12. The second mounting position 51 comprises a coordinate of the top portion 14 of the door body 11 before disassembling the door body 11 for mounting the glazing element 12. The third mounting position 61 comprises a coordinate of the bottom portion 15 of the door body 11 before disassembling the door body 11 for mounting the glazing element 12.

To determine the first receiving position 32 for the first locator unit 40, the second receiving position 33 for the second locator unit 50 and/or the third receiving position 34 for the third locator unit 60, a computer-implemented algorithm may be applied.

After the alignment of the glazing element 12 with the door body 11, the glazing element 12 may be fixed by at least one adjustment element 17. Thus, the control unit is further configured for fixing S8 the glazing element 12 inside the door body 11 by means of the adjustment element 17.

The adjustment element 17 may be arranged at the bottom portion 15 of the door body 11 and/or an elevator module (not shown) arranged inside the door body 11 to hide the adjustment element 17 from an outside of the door assembly 10. Generally, if the glazing element 12 may be accurately aligned with the door body 11, the glazing element 12 may be inclined substantially in direction to a vehicle cabin in the assembled state of the door assembly 10 at the vehicle body 20. Hence, the adjustment element 17 may ensure the glazing element 12 to be maintained permanently in the inclined position, wherein the glazing element 12 may be raised and lowered along the inclined position.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A manufacturing method for a door assembly (10) for a vehicle (100), the door assembly (10) comprising at least a door body (11) and a glazing element (12), the method comprising
- measuring (S1) at least a first mounting position (43) of the door assembly (10) relative to a vehicle body (20) before disassembling the door body (11) for mounting the glazing element (12),
- disassembling (S2) the door body (11) from the vehicle body (20),
- determining (S3) a first receiving position (32) of at least a first locator unit (40) of a glazing fixture system (30) based on the measured first mounting position (43),
- mounting (S4) the door body (11) with the glazing element (12) at the glazing fixture system (30),
- adjusting (S6) the first locator unit (40) based on the determined first receiving position (32), and
- aligning (S7) the glazing element (12) with the door body (11) by means of the first locator unit (40) of the glazing fixture system (30).

2. The manufacturing method according to claim 1, further comprising, arranging (S5) the first locator unit (40) at the glazing fixture system (30) to face a top portion (13) of the glazing element (12) when the glazing element (12) is in a closed position.

3. The manufacturing method according to claim 1 or 2, further comprising, measuring (S11) a second mounting position (51, 61) of the door assembly (10) relative to the vehicle body (20) before disassembling (S2) the door body (11) for mounting the glazing element (12), and determining (S31) a second receiving position (33, 34) of a second locator unit (50, 60) of the glazing fixture system (30) based on the measured second mounting position (51, 61), the second locator unit (50, 60) being configured to receive the door body (11).

4. The manufacturing method according to the preceding claim, further comprising receiving (S51) a top portion (14) of the door body (11) and/or a bottom portion (15) of the door body (11) by the second locator unit (50, 60) at the glazing fixture system (30), when mounting the door body (11) with the glazing element (12) at the glazing fixture system (30).

5. The manufacturing method according to any of the preceding claims, further comprising, painting (S0) the door body (11) before disassembling the door body (11) for mounting the glazing element (12).

6. The manufacturing method according to any of the preceding claims, the first mounting position (43) comprising a coordinate of the top portion (13) of the glazing element (12) relative to the top portion of the vehicle body (20) facing the top portion (13) of the glazing element (12) in an assembled state of the door assembly (10) at the vehicle body (20).

7. The manufacturing method according to any of the preceding claims, the second mounting position (51) comprising a coordinate of the top portion (14) of the door body (11) relative to the top portion of the vehicle body (20) in the assembled state of the door assembly (10) at the vehicle body (20).

8. The manufacturing method according to claim 1, adjusting (S6) the first locator unit (40) based on the determined first receiving position (32) comprising adjusting (S61) a first locator element (41) of the first locator unit (40) in a transverse direction (Y) relative to the door assembly (10) and/or a second locator element (42) of the first locator unit (40) in a vertical direction (Z) relative to the door assembly (10).

9. The manufacturing method according to the preceding claim, the first locator element (41) and the second locator element (42) being capable to be operated independently of each other.

10. The manufacturing method according to any of the preceding claims, further comprising, fixing (S8) the glazing element (12) inside the door body (11) by means of an adjustment element (17), the adjustment element (17) being configured to allow the glazing element (12) to be fastened at least in the first mounting position (43).

11. The manufacturing method according to any of the preceding claims, further comprising, arranging (S53) at least one vertical locator unit (70) at the glazing fixture system (30) based on the first mounting position (43) and/or the second mounting position (51) of the door assembly (10), the vertical locator unit (70) being configured to receive a vertical edge (16) of the glazing element (12), when mounting the door body (11) with the glazing element (12) at the glazing fixture system (30).

12. The manufacturing method according to any of the preceding claims, the first mounting position (43) and/or the second mounting position (51) of the door assembly (10) being aligned substantially along a b-pillar of the vehicle body (20).

13. A glazing fixture system (30) for manufacturing a door assembly (10) for a vehicle (100), the door assembly (10) comprising at least a door body (11) and a glazing element (12), comprising
- at least a first locator unit (40), and
- a control unit,
the control unit being configured to perform
- measuring at least a first mounting position (43) of the door assembly (10) relative to a vehicle body (20) before disassembling the door body (11) for mounting the glazing element (12),
- disassembling the door body (11) from the vehicle body (20),
- determining a first receiving position (32) of the first locator unit (40) of the glazing fixture system (30) based on the measured first mounting position (43),
- mounting the door body (11) with the glazing element (12) at the glazing fixture system (30),
- adjusting the first locator unit (40) based on the determined first receiving position (32), and
- aligning the glazing element (12) with the door body (11) by means of the first locator unit (40) of the glazing fixture system (30).

14. Use of a glazing fixture system (30) according to claim 13 for mounting a glazing element (12) at a door body (11) of a door assembly (10) without a door frame.

15. A computer program element, for a glazing fixture system (30) for a door assembly (10) for a vehicle (100) according to claim 13, which, when being executed by a processing element, being adapted to perform the method steps of the method claims according to any of the preceding claims 1 to 12.

## Amended claims

### Amended claims in accordance with Rule 137(2) EPC.

1. A manufacturing method for a door assembly (10) for a vehicle (100), the door assembly (10) comprising at least a door body (11) and a glazing element (12), the method comprising
- measuring (S1) at least a first mounting position (43) of the door assembly (10) relative to a vehicle body (20) before disassembling the door body (11) for mounting the glazing element (12),
- disassembling (S2) the door body (11) from the vehicle body (20),
- determining (S3) a first receiving position (32) of at least a first locator unit (40) of a glazing fixture system (30) based on the measured first mounting position (43),
- mounting (S4) the door body (11) with the glazing element (12) at the glazing fixture system (30),
- adjusting (S6) the first locator unit (40) based on the determined first receiving position (32),
- aligning (S7) the glazing element (12) with the door body (11) by means of the first locator unit (40) of the glazing fixture system (30), and
- fixing (S8) the glazing element (12) inside the door body (11) by means of an adjustment element (17),
the adjustment element (17) being arranged inside the door body (11) to maintain the glazing element (12) in an inclined position.

2. The manufacturing method according to claim 1, further comprising, arranging (S5) the first locator unit (40) at the glazing fixture system (30) to face a top portion (13) of the glazing element (12) when the glazing element (12) is in a closed position.

3. The manufacturing method according to claim 1 or 2, further comprising, measuring (S11) a second mounting position (51, 61) of the door assembly (10) relative to the vehicle body (20) before disassembling (S2) the door body (11) for mounting the glazing element (12), and determining (S31) a second receiving position (33, 34) of a second locator unit (50, 60) of the glazing fixture system (30) based on the measured second mounting position (51, 61), the second locator unit (50, 60) being configured to receive the door body (11).

4. The manufacturing method according to the preceding claim, further comprising receiving (S51) a top portion (14) of the door body (11) and/or a bottom portion (15) of the door body (11) by the second locator unit (50, 60) at the glazing fixture system (30), when mounting the door body (11) with the glazing element (12) at the glazing fixture system (30).

5. The manufacturing method according to any of the preceding claims, further comprising, painting (S0) the door body (11) before disassembling the door body (11) for mounting the glazing element (12).

6. The manufacturing method according to any of the preceding claims, the first mounting position (43) comprising a coordinate of the top portion (13) of the glazing element (12) relative to the top portion of the vehicle body (20) facing the top portion (13) of the glazing element (12) in an assembled state of the door assembly (10) at the vehicle body (20).

7. The manufacturing method according to any of the preceding claims, the second mounting position (51) comprising a coordinate of the top portion (14) of the door body (11) relative to the top portion of the vehicle body (20) in the assembled state of the door assembly (10) at the vehicle body (20).

8. The manufacturing method according to claim 1, adjusting (S6) the first locator unit (40) based on the determined first receiving position (32) comprising adjusting (S61) a first locator element (41) of the first locator unit (40) in a transverse direction (Y) relative to the door assembly (10) and/or a second locator element (42) of the first locator unit (40) in a vertical direction (Z) relative to the door assembly (10).

9. The manufacturing method according to the preceding claim, the first locator element (41) and the second locator element (42) being capable to be operated independently of each other.

10. The manufacturing method according to any of the preceding claims, the adjustment element (17) being configured to allow the glazing element (12) to be fastened at least in the first mounting position (43).

11. The manufacturing method according to any of the preceding claims, further comprising, arranging (S53) at least one vertical locator unit (70) at the glazing fixture system (30) based on the first mounting position (43) and/or the second mounting position (51) of the door assembly (10), the vertical locator unit (70) being configured to receive a vertical edge (16) of the glazing element (12), when mounting the door body (11) with the glazing element (12) at the glazing fixture system (30).

12. The manufacturing method according to any of the preceding claims, the first mounting position (43) and/or the second mounting position (51) of the door assembly (10) being aligned substantially along a b-pillar of the vehicle body (20).

13. A glazing fixture system (30) for manufacturing a door assembly (10) for a vehicle (100), the door assembly (10) comprising at least a door body (11) and a glazing element (12), comprising
- at least a first locator unit (40), and
- a control unit,
the control unit being configured to perform
- measuring at least a first mounting position (43) of the door assembly (10) relative to a vehicle body (20) before disassembling the door body (11) for mounting the glazing element (12),
- disassembling the door body (11) from the vehicle body (20),
- determining a first receiving position (32) of the first locator unit (40) of the glazing fixture system (30) based on the measured first mounting position (43),
- mounting the door body (11) with the glazing element (12) at the glazing fixture system (30),
- adjusting the first locator unit (40) based on the determined first receiving position (32),
- aligning the glazing element (12) with the door body (11) by means of the first locator unit (40) of the glazing fixture system (30), and
- fixing the glazing element (12) inside the door body (11) by means of an adjustment element (17),
the adjustment element (17) being arranged inside the door body (11) to maintain the glazing element (12) in an inclined position.

14. Use of a glazing fixture system (30) according to claim 13 for mounting a glazing element (12) at a door body (11) of a door assembly (10) without a door frame.

15. A computer program element, for a glazing fixture system (30) for a door assembly (10) for a vehicle (100) according to claim 13, which, when being executed by a processing element, being adapted to perform the method steps of the method claims according to any of the preceding claims 1 to 12.
